# EUROPEAN PATENT SPECIFICATION

(11) **EP 3 852 549 B1**
(45) Date of publication and mention of the grant of the patent: **15.01.2025**
(21) Application number: 19783701.6
(22) Date of filing: 18.09.2019
(51) Int. Cl.: A23L 2/04, C12G 1/00, A23N 1/00, B30B 9/22

(54) **PLANT AND METHOD FOR THE EXTRACTION OF JUICE FROM VEGETABLE RAW MATERIAL**
ANLAGE UND VERFAHREN ZUR EXTRAKTION VON SAFT AUS PFLANZLICHEN ROHSTOFFEN
INSTALLATION ET PROCÉDÉ D'EXTRACTION DE JUS D'UNE MATIÈRE PREMIÈRE VÉGÉTALE

(30) Priority: 21.09.2018 IT 201800008817
(43) Date of publication of application: 28.07.2021
(73) Proprietor: OMNIA DELLA TOFFOLA S.P.A., 31040 Trevignano (TV) (IT)
(72) Inventor: DELLA TOFFOLA, Giacomo, 31044 Montebelluna (TV) (IT); AMAMI, Yacine, Tunisi, 2092 (TN); DELLA TOFFOLA, Francesco, 31040 Trevignano (TV) (IT)
(74) Representative: Dragotti & Associati S.R.L.
(86) International application number: PCT/IB2019/057851
(87) International publication number: WO 2020/058866

(56) References cited:
- EP-A1- 0 341 098
- EP-A2- 0 569 695
- EP-A2- 1 338 408
- EP-B1- 0 341 098
- WO-A1-2015/068026
- ES-A2- 2 076 070
- FR-A1- 2 826 665
- FR-B1- 2 826 665
- US-A- 4 872 404

## Description

The present invention relates to a plant and a method for the extraction of juice from vegetable raw material. In particular, the present invention relates to a plant and a method for the extraction of must from grape berries.

In the following description, reference will be made, purely by way of a non-limiting example, to vinification and in particular the extraction of must by pressing grape berries, it being understood that the same principles may be advantageously used for the extraction of juice by pressing fruit or vegetables.

In the so-called white wine, rosé wine and red wine vinification processes, the common starting point is to obtain the must from the grapes which have been harvested.

The differences arise later, since in the case of white wine vinification the must is separated from the stalks and skins, while in the case of rosé wine and red wine the must remains mixed with the solid pressing residue (skins and pips) for the maceration phase, with a contact time between must, skins and pips which varies (a relatively short time for rosé wine and a much longer time for red wine vinification).

For simpler and easier description, below reference will be made primarily to white wine vinification, where the grapes are subjected to pressing, preferably without prior destemming, so as to make use of the stems for the subsequent straining operation, i.e. for separation of the must from the skins and seeds.

Alternatively, the previously destemmed grapes are pressed in membrane presses, where the destemmed grapes occupy a part of a hollow cylinder containing a membrane which, in the rest condition, is adjacent to one of the walls of the cylinder. These presses are also called side membrane presses.

By injecting a fluid under pressure from the side of the membrane opposite to that in contact with the loaded batch of grapes, the membrane compresses the berries causing them to break and the juice to escape through a number of draining holes provided in the adjacent wall of the cylinder. In this way, the skins and seeds are retained inside the cylinder and the amount of suspended solids in the juice extracted from the press is limited.

This method of pressing, and therefore obtaining the must, is obviously discontinuous, since it involves four cycle phases, namely:
filling the press with the predefined quantity of grapes;
pressing;
discharging the residual solid pressed part (stems, skins and grape seeds);
washing the press.

If it is considered, as an example, that each load of a 100 hectolitre press comprises an average of 20 tons of grapes from the harvest, and that pressing can take from 1 hour 40 minutes to 4 hours,

it is clear that the cycle time is quite long, while the operational requirements are such that a harvest must be concentrated within the time span of a few days.

In addition, the harvested grapes must be processed as soon as possible, in view of the rapid deterioration or at least the initial fermentation which may occur during the waiting time and which affects the characteristics and quality of the wine subsequently produced.

The pressing time has been substantially reduced by using cylindrical presses in which the membrane is in the form of a bag arranged in a diametral plane, so that the expansion takes place towards the entire cylindrical wall (obviously provided with draining holes over its entire surface). These membrane presses, also known as central membrane presses, owing to the arrangement of draining holes over the entire surface, allow a larger quantity of grapes to be loaded into a single press. For example, a 100 hectolitre central membrane press may be loaded with 25 tons of grapes, that is, for the same size, with 25% more grapes compared to side membrane presses.

In this way it is possible to reduce substantially the duration of the pressing step (to 1-2 hours), without, however, eliminating the abovementioned above problems. In fact, even when using a central membrane press, the pressing method remains discontinuous. WO 2015/068026 A1 discloses a filter press suitable for separating a liquid fraction from a solid mass, comprising at least one filtration column which includes at least one loading/pressing module for said sludge, said filtration column being fixed and extending vertically with respect to a reference plane parallel to the ground. WO 2015/068026 A1 also discloses a pressing plant comprising a plurality of filter presses disposed in such a manner as to operate in series and/or in parallel.

As an alternative to pressing of the type briefly described above, it is possible to use continuous pressing systems consisting essentially of a helical screw press: in this case, however, the gain in pressing speed is accompanied by a deterioration in the quality of the must, since pressing the grape berries against the walls surrounding the screw also results in greater fragmentation of the skins and shredding of the seeds.

For this reason, the resultant must also contains substances extracted from the skins and seeds that adversely affect the resultant wine from a qualitative point of view.

In addition, cleaning the screw and the interstices in the cylinder which contains the screw is very difficult and takes longer than washing a membrane press.

In a nutshell, the main problem hitherto not solved is the production of a must from harvested grapes which allows continuous processing of the grapes in short cycle times, preventing the skins and/or grape seeds from releasing unwanted components in the wine.

Another problem not solved hitherto is that of the versatility of the plant, since often the pressing of a first type of grape is followed by the pressing of grapes of a completely different type (for example, when changing from white wine vinification to red wine vinification): until now it has been necessary to wait for the press or presses (if there are more than one) designed for the pressing of white grapes to finish the cycle with the final washing step, before loading the harvested grapes to be used for red wine vinification.

As already mentioned, storing the harvested grapes for more or less long periods before performing pressing has a negative impact on the quality of the resultant wine.

In order to remedy this problem, the batches of grapes awaiting pressing are often stored at low temperatures in order to temporarily stop fermentation.

The winery, therefore, must equip itself with temperature control and refrigeration systems, machinery which is obviously expensive both in terms of purchase price and in terms of operating and maintenance costs.

The main object of the present invention is to provide a plant and a method able to solve substantially the problems and drawbacks briefly outlined above.

Another object of the present invention is to provide a plant and a method for the extraction of juice from vegetable raw material, in particular for the extraction of must from harvested grapes, which are flexible and adaptable during use in order to cope with both peaks in production and the treatment of vegetable raw material of varied origin, in particular grape berries of different types.

A further object of the present invention is to provide a plant for the extraction of juice from vegetable raw material, in particular for the extraction of must from harvested grape berries, which may be easily expanded and implemented if necessary.

These and other objects are achieved with a plant for the extraction of juice from vegetable raw material, in particular for the extraction of must from grape berries, as defined in claim 1, and with a method for the extraction of juice from vegetable raw material, in particular for the extraction of must from grape berries, according to claim 9.

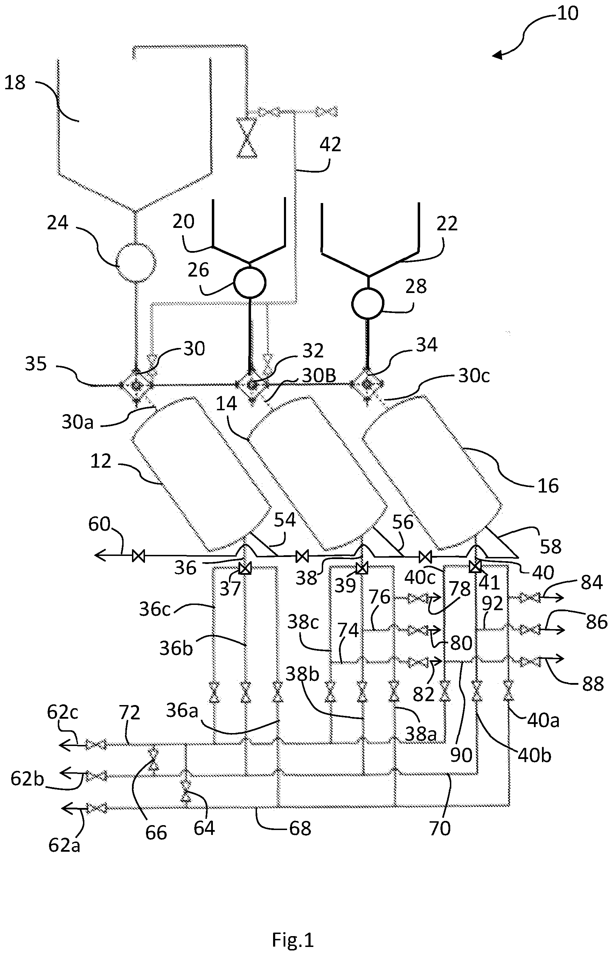

In order to illustrate more clearly the innovative principles of the present invention and its advantages compared to the prior art, examples of embodiment applying these principles will be described below with the aid of the Figure 1, which shows a schematic diagram of an embodiment of a plant according to the invention.

Figure 1 shows a preferred embodiment of a plant, denoted overall by the reference number 10, for continuous pressing in a vinification process provided according to the invention.

The plant 10 comprises three presses for continuous pressing of grapes, denoted by the reference numbers 12, 14 and 16, respectively, said presses being preferably of the central membrane type and comprising a plurality of draining holes (not shown in the attached figure).

It is understood, however, that reference to such presses is not be regarded in a limiting sense, in that the present invention may also be implemented using other known types of discontinuous presses.

Preferably, the presses 12, 14, 16 are arranged in parallel with each other.

Each press is supplied by a respective hopper or tank 18, 20 and 22 which is filled with the harvested grapes to be pressed for the production of must.

The tanks 18, 20 and 22, which are components known per se, may be for example a stainless steel tank or a wooden vat. Each tank 18, 20, 22 may be loaded with grapes as such, or with grapes obtained from a destemming or a destemming/pressing step in the case of white wine vinification. Otherwise, in the case of red wine vinification, each tank 18, 20, 22 is loaded with grapes obtained from a maceration vat (not shown in the figures) following a prior maceration step.

Each tank 18, 20 and 22 communicates with the respective press 12, 14, 16 by means of a pump - respectively indicated by 24, 26 and 28 - positioned upstream of a multi-path distribution valve 30, 32 and 34 communicating with the respective press 12, 14, 16 by means of an inlet duct 30a, 30b and 30c.

According to the invention the distribution valves 30, 32, 34 are movable at least between two positions. In a first position each inlet duct 30a, 30b, 30c is connected to a first hopper and in the second position each inlet duct 30a, 30b, 30c is closed or connected to at least one second hopper different from the hopper to which it is connected when the respective valve is located in the first position.

Advantageously, the three presses 12, 14, 16 may be supplied from a single tank, for example the tank 18, and the pump 24 associated with this tank 18 may regulate and perform the selectively supplying of the grapes to the plurality of presses by means of the distribution valves 30, 32, 34. For this purpose, as shown in Figure 1, the three distribution valves 30, 32, 34 are connected by means of a single duct 35.

Obviously, the number of presses, and consequently the number of respective hoppers, may also be more than three depending on the production needs of the plant. In this case the implementation of this particular type of plant is particularly simple.

Moreover, a line 42 for supplying the washing water may be provided, said line being connected with each of the tanks 18, 20, 22 and with each of the presses 12, 14, 16 so as to supply the washing water inside the tanks 18, 20, 22 and the presses 12, 14, 16 at the end of the pressing process.

The must produced in each press 12, 14, 16 is channelled into a respective main outlet duct, respectively indicated by 36, 38 and 40. Each main outlet duct 36, 38, 40 communicates with the draining holes of the corresponding press so as to convey the must produced by pressing.

Each press 12, 14, 16 is provided with a further outlet, respectively indicated by 54, 56 and 58, for the pomace produced during pressing, these outlets leading into a common outlet 60. Alternatively, the presses 12, 14, 16 discharge the pomace into a hopper equipped with a helical screw for discharging the pomace externally.

In the embodiment shown, each main outlet duct 36, 38, 40 for the must or the juice output from each press 12, 14, 16 is connected via valve means 37, 39, 41 to three discharge branches: respectively 36a, 36b, 36c for the outlet duct 36 of the press 12; 38a, 38b and 38c for the outlet duct 38 of the press 14; and 40a, 40b, 40c for the outlet duct 40 of the press 16.

The branches 36a, 36b, 36c; 38a, 38b, 38c; 40a, 40b, 40c can be selected, by operating the valve means 37, 39, 41 depending on the vegetable raw material treated in each press 12, 14, 16. Advantageously, one of the discharge branches 36a, 38c, 40c, is dedicated for discharging the washing water.

Preferably, the discharge branches 38a, 38b, 38c of the second press 14 and/or the discharge branches 40a, 40b, 40c of the third press 16 can be connected to the discharge branches 36a, 36b, 36c of the first press 12.

In detail, these branches 36a, 36b, 36c; 38a, 38b, 38c; 40a, 40b, 40c can be connected together by means of discharge headers indicated by 68, 70 and 72.

Advantageously, the branches 36a, 38a and 40a can be selectively connected to the header 68; the branches 36b, 38b and 40b to the header 70; and the branches 36c, 38c and 40c to the header 72. With the operating modes explained below, the branches 36a, 38a, 40a may be used for a first quality (A) of must, the branches 36b, 38b, 40b for a second or different quality (B) of must, and the branches 36a, 38c, 40c for the washing water.

Below, the expression "must of quality A" is used to indicate the must obtained by a first pressing of the berries inside each of the presses 12, 14, 16, while the expression "must of quality B" means the must obtained from a subsequent pressing of the same berries inside each of the presses 12, 14, 16.

As shown, the outlet duct 36 of the first press 12 communicates, via the branches 36a, 36b and 36c and the discharge headers 68, 70 and 72, respectively with end outlets for the product, indicated respectively by 62a for the quality A product, by 62b for the quality B product and by 62c for the washing water.

Suitable branched ducts 64 and 66 (provided with control valves) connect the discharge headers 68 and 70 to the discharge header 72. Said branched ducts 64, 66 may be advantageously used to convey the washing liquid from the discharge header 72 to the headers 68 and 70, after the pressing product (for example quality A or B product) has been discharged via the outlets 62a and 62b.

The branches 38a, 38b and 38c of the outlet duct 38 of the second press 14 can be connected, not only to the headers 68, 70, 72, but also to respective outlets 78, 80 and 82 for discharging, respectively, the quality A product, the quality B product or the washing water.

The branched ducts 74 and 76 connect the branches 38a and 38b respectively to the outlets 82 and 80.

Similarly the branches 40a, 40b and 40c of the outlet duct 40 of the third press 16 can be connected, not only to the headers 68, 70, 72, but also to respective outlets 84, 86 and 88 for discharging, respectively, the quality A product, the quality B product or the washing water.

Also present are branched ducts 90 and 92 which connect the branches 40c and 40b to the outlets 88 and 86.

Since there is the possibility that the three presses may be loaded with three different starting vegetable raw materials, for example the presses 12 and 14 may be loaded respectively with white grapes and red grapes and the press 16 may be loaded with pears or apples, the possibility is provided (not shown in the figures, but able to be easily understood and therefore realized by the person skilled in the art) of using the discharge outlet 40c of the press 16 for the outflow of the juice instead of the washing water or providing a fourth discharge branch for at least one of the presses or for each of them.

The main outlet ducts 36, 38, 40 and the branched ducts 64, 66, 74, 76, 90, 92 comprise respective valves for selectively discharging the juices and the musts or the washing water via the respective outlets.

Advantageously, the plant 10 is provided with a control unit (not shown in the figures) configured to control the selective activation of the pumps 24, 26, 28 of the distribution valves 30, 32, 34 and the discharge valves described above.

As already mentioned, Figure 1 shows the solution comprising three hoppers 18, 20, 22 which can be each connected, via suitable operation of the distribution valves 30, 32, 32, to each press 12, 14, 16.

Obviously, this embodiment does not exclude the possibility of providing one or two hoppers which serve all three presses 12, 14 and 16.

In this case, the distribution valves 30, 32, 34 provided in the circuit downstream of the hoppers are designed to convey the grapes to be pressed, pumped by the appropriate pump, towards the press which is in each case is preselected by the control unit.

On the basis of the above description the method for the extraction of juice from vegetable raw material, in particular for the extraction of must from grapes, according to the present invention is now described.

This method is characterized by the following steps:
(a) loading the hopper 18 of the first press 12 with vegetable raw material of a first type, actuation of said valve means 30, 32 and transfer via the corresponding inlet duct 30a to the first press 12;
(b) upon reaching a predefined filling percentage of the first press 12, actuation of said valve means 30, 32 for transferring the said vegetable raw material of the first type from the hopper 18 of the first press 12 to the inlet duct 30b of the second press 14 until a predefined filling percentage of the second press 14 is reached;
c) at the end of the pressing step inside the first press 12 and inside the second press 14, switching of the corresponding valve means 30, 32 for supplying washing water to the inlet duct 30a, 30b of the first press 12 and the second press 14.

Advantageously, the transfer of the vegetable raw material from the hopper 18 of the first press 12 to the inlet duct 30b of the second press 14 may be performed when the first press 12 is completely filled. In this way, the method according to the present invention allows a quantity of vegetable raw material which would be too much for the first press 12, but which may be easily pressed inside a second press 14, to be diverted to the second press.

Similarly, in the case where a third press 16 is connected in parallel to the first press 12 and to the second press 14, once a predefined filling percentage filling of the second press 14 is reached, for example also when the second press is completely full, by suitably operating the valve means 30, 32, 34 the vegetable raw material from the hopper 18 may be transferred to the inlet duct 30c of the third press 16 until a predefined filing percentage thereof is reached.

At the end of the pressing step inside the third press 16, again by means of actuation of the corresponding valve means 34, the corresponding inlet duct of the third press 16 may be supplied with washing water.

The second press and the third press, via the corresponding valve means 32, 34, may also be connected to a second hopper 20 and/or to a third hopper 22 loaded with vegetable raw material different from that of the first hopper 18.

Advantageously, during the transfer of the vegetable raw material from the first hopper 18 to the first press 12, simultaneously or alternately the transfer of the vegetable raw material from the second hopper and/or from the third hopper to the second press 14 and/or to the third press 16 may take place.

To summarize, the plant according to the present invention has essentially three possible operating modes:
(i) continuous mode, where all three presses 12, 14 and 16 may be loaded in succession with the same type of vegetable raw material, in particular grapes, producing a single type of must, for the sake of clarity indicated as must X, from which a quality A is obtained, this being conveyed towards the outlet 62a via the branches 36a, 38a and 40a, and then a quality B, which is conveyed towards the outlet 62b, via the branches 36b, 38b and 40b.
(ii) semi-continuous mode, namely a combination of continuous and discontinuous, where two presses, for example the presses 12 and 14, may be loaded in succession with the same type of grapes, while the third press 16 may be loaded with a different type of grape, so that the presses 12 and 14 produce a first type of must X, of quality A and B, while the press 16 produces a second type of must Y, also of quality A and B;
(iii) discontinuous mode, where the three presses may be loaded with different starting vegetable raw materials, i.e. as already mentioned, the press 12 with white grapes, the press 14 with red grapes and the press 16 with different fruit (pears, apples, etc.); the press 12 produces a first type of must X, of quality A and B, the press 14 produces a second type of must Y, of quality A and B, and the third press 16 produces a third type of juice Z, which may also be of quality A and B.

In mode (i) the outlets 62a and 62b will be used in succession for the must X of quality A and B, respectively, and also the outlet 62a for the washing water when, after pressing, washing of the presses and the entire plant is performed. Therefore the outlets 78, 80 and 82, as well as the outlets 84, 86 and 88, will be closed and not used.

In the mode (ii) the outlets 62a and 62b will be used, respectively for the must X of quality A and B obtained from the presses 12 and 14, so that the outlets 78, 80 and 82 will be closed, while the outlets 84, 86 and 88 will be open and operative, for the must Y of quality A and B of the press 16 and for the corresponding washing water.

Finally, in the mode (iii) all the outlets will be used, namely the outlets 62a, 62b and 62c for the press 12, the outlets 78, 80 and 82 for the press 14, and the outlets 84, 86 and 88 for the press 16. In detail, the outlet 62a will be used for the must X of quality A, the outlet 62b will be used for the must X of quality B, and the outlet 62c will be used for the washing water.

Similarly, the outlet 78 will be used for the must Y of quality A, the outlet 80 will be used for the must Y of quality B, and the outlet 82 will be used for the washing water.

Finally, the outlet 78 will be used for the juice Z of quality A, the outlet 86 will be used for the juice Z of quality B, and the outlet 88 will be used for the washing water.

The implementation of the preferred working mode may be performed by means of the selective activation of the pumps 24, 26, 28 of the valve means 30, 32, 34 and the discharge valves by means of the control unit.

Below, by way of example, some operating modes of the plant described above are illustrated, with a comparison between central membrane presses and side membrane presses also being made.

Below reference will also be made to a short cycle and a long cycle. The difference in the duration of the pressing cycle is determined by the difficulty with which the must is extracted from the grapes. This factor depends on the type of grape, the terrain, the climate, the winemaking methods used and also the type of wine to be obtained.

It should be considered that with central membrane presses the short cycle may have a duration of 60 minutes and the long cycle a duration of 90 minutes. In the case of side membrane presses the short cycle may have a duration of 100 minutes and the long cycle a duration of 150 minutes.

### Example 1

A plant comprising three central membrane presses each with a capacity of 100 hl outputs a constant flow, for each press, equal to:
30 t per hour for a short cycle (60 minutes);
21.5 t per hour for a long cycle (90 minutes).

A plant comprising three side membrane presses each with a capacity of 100 hl outputs a constant flow, for each press, equal to:
17.5 t per hour for a short cycle (100 minutes);
12.5 t per hour for a long cycle (150 minutes).

A plant comprising four central membrane presses each with a capacity of 100 hl outputs a constant flow, for each press, equal to:
45 t per hour for a short cycle (60 minutes);
35 t per hour for a long cycle (90 minutes);

A plant comprising four side membrane presses each with a capacity of 100 hl outputs a constant flow, for each press, equal to:
25.5 t per hour for a short cycle (100 minutes);
19 t per hour for a long cycle (150 minutes).

A plant comprising five central membrane presses each with a capacity of 100 hl outputs a constant flow, for each press, equal to:
60 t per hour for a short cycle (60 minutes);
46 t per hour for a long cycle (90 minutes);

A plant comprising five side membrane presses each with a capacity of 100 hl outputs a constant flow, for each press, equal to:
34 t per hour for a short cycle (100 minutes);
25 t per hour for a long cycle (150 minutes).

From the above data it can also be noted how the plant with central membrane presses is more advantageous than the plant with side membrane presses. In order to obtain the same output as a plant with three central membrane presses, essentially five side membrane presses must be used.

### Example II

A plant comprising three central membrane presses each with a capacity of 200 hl outputs a constant flow, for each press, equal to:
60 t per hour for a short cycle (60 minutes);
43 t per hour for a long cycle (90 minutes).

A plant comprising three side membrane presses each with a capacity of 200 hl outputs a constant flow, for each press, equal to:
35 t per hour for a short cycle (100 minutes);
25 t per hour for a long cycle (150 minutes).

A plant comprising four central membrane presses each with a capacity of 200 hl outputs a constant flow, for each press, equal to:
90 t per hour for a short cycle (60 minutes);
70 t per hour for a long cycle (90 minutes).

A plant comprising four side membrane presses each with a capacity of 200 hl outputs a constant flow, for each press, equal to:
51 t per hour for a short cycle (100 minutes);
38 t per hour for a long cycle (150 minutes).

A plant comprising five central membrane presses each with a capacity of 200 hl outputs a constant flow, for each press, equal to:
120 t per hour for a short cycle (60 minutes);
92 t per hour for a long cycle (90 minutes).

A plant comprising five side membrane presses each with a capacity of 200 hl outputs a constant flow, for each press, equal to:
68 t per hour for a short cycle (100 minutes);
50 t per hour for a long cycle (150 minutes).

From the above data of the second example it can also be noted how the plant with central membrane presses is more advantageous than the plant with side membrane presses.

The above description clearly illustrates the main advantage achieved with the present invention, namely the flexibility of use, so that the plant is able to cope with production peaks associated with a single grape type (case (i)), and the change-over from one type of product to another, as occurs for example when the pressing of white grapes must be carried out along with the pressing of grapes for red wine or rosé wine vinification (case (ii)).

An equally important advantage of the present invention consists in the fact that the production capacity of the individual press, understood as being the amount of product which may be processed, is of less importance, while the reduction in the time needed to press given amounts of grapes becomes a decisive factor.

This is a major advantage considering that, as already mentioned, the harvest is concentrated within the space of very few days and the time spent by the grapes inside the collection and transport carts or inside the storage tanks results in a deterioration in the quality of the must and therefore of the resultant wine following the premature start of fermentation, unless the harvested grapes are kept under refrigerated conditions, which obviously increases production costs.

The above description refers to a plant comprising three presses, but this solution must not be regarded as being as the only one possible, since it is envisaged and may be envisaged providing a plant which comprises at least two presses, the number of said presses being able to be increased to also more than three, preferably to an even number and a multiple of two or three.

The above description relates to the pressing of grapes which represents the preferred field of application of the present invention. However it is also possible and envisaged that the plant may be used for the production of fruit juices and/or juices of raw material of vegetable origin. This results in a further significant advantage of the present invention since it allows the plant to be used not just for the pressing of grapes, and therefore only for the short duration of the harvest, but instead during the whole of the year.

## Claims

1. Plant (10) for the extraction of juice from vegetable raw material, in particular for the extraction of must from grape berries, of the type comprising at least two presses (12; 14, 16), provided with an inlet duct (30a; 30b, 30c) and a first outlet duct (36; 38, 40) for the extracted juice and a second outlet duct or discharge opening (54; 56, 58) for the solid residues or lees of the starting vegetable raw material, said presses (12; 14, 16) being of the membrane type and being provided with draining holes communicating with said first outlet duct (36; 38, 40), said inlet duct (30a; 30b, 30c) being connected both to a hopper (18; 20, 22) for loading and supplying said vegetable raw material and to a washing water supply (42), **characterized in that**
said at least two presses (12; 14, 16) are mounted in parallel with each other and on said inlet duct (30b, 30c) of the second (14, 16) of said at least two presses (12; 14, 16) valve means (32, 34) are provided which are movable between two positions, a first position wherein the inlet duct (30b, 30c) of said second press (14, 16) is connected to said loading and supply hopper (18) of said first press (12) and a second position wherein said second press (14, 16) is connected to a loading and supply hopper (20, 22) for vegetable raw material different from that of said first press (12).

2. Plant (10) according to claim 1, **characterized in that** said at least two presses (12; 14, 16) are of the central membrane type.

3. Plant (10) according to claim 1, **characterized in that** it comprises three presses (12, 14, 16) mounted in parallel and **in that** said valve means (32, 34) are mounted on the inlet ducts (30b, 30c) of said second and third presses (14, 16).

4. Plant (10) according to any one of the preceding claims, **characterized in that** each first outlet duct (36, 38, 40) of each press (12, 14, 16) is connected by valve means (37, 39, 41) to three discharge branches (36a, 36b, 36c; 38a, 38b, 38c; 40a, 40b, 40c), designed to be selected depending on the vegetable raw material treated in each press (12, 14, 16), one of said discharge branches (36c, 38c, 40c) being dedicated for discharging washing water.

5. Plant (10) according to claim 4, **characterized in that** the discharge branches (38a, 38b, 38c) of said second press (14) and/or the discharge branches (40a, 40b, 40c) of said third press (16) are designed to be connected to the three discharge branches (36a, 36b, 36c) of said first press (12).

6. Plant (10) according to claim 5, **characterized in that** said discharge branches (36a, 36b, 36c; 38a 38b, 38c; 40a, 40b, 40c) are designed to be connected to each other by means of discharge headers (68, 70, 72); first discharge branches (36a, 38a, 40a) of each press (12, 14, 16) being designed to be connected to a first discharge header (68), second discharge branches (36b, 38b, 40b) of each press (12, 14, 16) being designed to be connected to a second discharge header (70) and third discharge branches (36c, 38c, 40c) of each press (12, 14, 16) being designed to be connected to a third discharge header (72).

7. Plant (10) according to claim 1, **characterized in that** said washing water supply (42) is connected to said inlet duct (30a, 30b, 30c) of each press (12, 14, 16) or to the hopper (18, 20, 22) for loading and supplying vegetable raw material.

8. Plant (10) according to claim 1, **characterized in that** each of said presses (12, 14, 16) is connected by means of the corresponding inlet duct (30a, 30b, 30c) to a corresponding hopper (18, 20, 22) for loading and supplying vegetable raw material.

9. Method for extracting juice from vegetable raw material, in particular for extracting must from grape berries, by means of a plant according to one or more of claims 1 to 8, **characterized by** the steps of:
(a) loading the hopper (18) of the first press (12) with vegetable raw material of a first type, actuation of said valve means (30, 32) and transfer via the corresponding inlet duct (30a) to said first press (12);
(b) upon reaching a predetermined filling percentage of said first press (12), actuation of said valve means (30, 32) for transferring said first type of vegetable raw material from said hopper (18) of the first press (12) to the inlet duct (30b) of said second press (14) until a predetermined filling percentage of said second press (14) is reached;
c) at the end of the pressing step in the first press (12) and in the second press (14), switching of said valve means (30, 32) for supplying washing water to the inlet duct (30a, 30b) of said first press (12) and of said second press (14).

10. Method according to claim 9, **characterized in that** the transfer of said vegetable raw material from the hopper (18) of the first press (12) to the inlet duct (30b) of the second press (14) takes place when the first press (12) is completely filled.

11. Method according to claim 9, **characterized by** the steps of:
d) upon reaching a predetermined filling percentage of said second press (14), actuation of said valve means (30, 32, 34) for transferring said first type of vegetable raw material from said hopper (18) of the first press (12) to the inlet duct (30c) of said third press (16) until a predetermined filling percentage of said third press (16) is reached;
e) at the end of the pressing step in the third press (16), switching of said valve means (34) for supplying washing water to said inlet duct (30c) of the third press (16).

12. Method according to claim 11, **characterized by** the step of:
f) actuatuion of said valve means (32, 34) for connecting the inlet ducts (30b, 30c) of said second press (14) and of said third press (16) to a second hopper (20) and/or to a third hopper (22) loaded with vegetable raw material different from the vegetable raw material of the first hopper (18).

13. Method according to claim 11, **characterized by** the step of:
g) during the transfer of the vegetable raw material from the first hopper (18) to the first press (12), simultaneous or alternative transfer of the first vegetable material from the second hopper (20, 22) to the second press (14) and/or to the third press (16).

## Patentansprüche

1. Anlage (10) zur Extraktion von Saft aus pflanzlichem Rohmaterial, insbesondere zur Extraktion von Most aus Traubenbeeren, der Art, die mindestens zwei Pressen (12; 14, 16) umfasst, die mit einem Einlasskanal (30a; 30b, 30c) und einem ersten Auslasskanal (36; 38, 40) für den extrahierten Saft und einem zweiten Auslasskanal oder einer Auslassöffnung (54; 56, 58) für die festen Rückstände oder den Trub des pflanzlichen Ausgangsrohmaterials versehen sind, wobei die Pressen (12; 14, 16) von dem Membrantyp sind und mit Abflusslöchern versehen sind, die mit dem ersten Auslasskanal (36; 38, 40) in Verbindung stehen, wobei der Einlasskanal (30a; 30b, 30c) sowohl mit einem Trichter (18; 20, 22) zum Laden und Zuführen des pflanzlichen Rohmaterials als auch mit einer Waschwasserzufuhr (42) verbunden ist, **dadurch gekennzeichnet, dass**
die mindestens zwei Pressen (12; 14, 16) parallel zueinander montiert sind und an dem Einlasskanal (30b, 30c) der zweiten (14, 16) der mindestens zwei Pressen (12; 14, 16) Ventilmittel (32, 34) bereitgestellt sind, die zwischen zwei Positionen beweglich sind, einer ersten Position, wobei der Einlasskanal (30b, 30c) der zweiten Presse (14, 16) mit dem Lade- und Zuführtrichter (18) der ersten Presse (12) verbunden ist, und einer zweiten Position, wobei die zweite Presse (14, 16) mit einem Lade- und Zuführtrichter (20, 22) für pflanzliches Rohmaterial verbunden ist, das sich von dem der ersten Presse (12) unterscheidet.

2. Anlage (10) nach Anspruch 1, **dadurch gekennzeichnet, dass** die mindestens zwei Pressen (12; 14, 16) von dem Zentralmembrantyp sind.

3. Anlage (10) nach Anspruch 1, **dadurch gekennzeichnet, dass** sie drei parallel montierte Pressen (12, 14, 16) umfasst und dass die Ventilmittel (32, 34) an den Einlasskanälen (30b, 30c) der zweiten und dritten Pressen (14, 16) montiert sind.

4. Anlage (10) nach einem der vorstehenden Ansprüche, **dadurch gekennzeichnet, dass** jeder erste Auslasskanal (36, 38, 40) jeder Presse (12, 14, 16) über Ventilmittel (37, 39, 41) mit drei Auslasszweigen (36a, 36b, 36c; 38a, 38b, 38c; 40a, 40b, 40c) verbunden ist, die dazu ausgelegt sind, in Abhängigkeit von dem in jeder Presse (12, 14, 16) behandelten pflanzlichen Rohmaterial ausgewählt zu werden, wobei einer der Auslasszweige (36c, 38c, 40c) zum Ablassen von Waschwasser vorgesehen ist.

5. Anlage (10) nach Anspruch 4, **dadurch gekennzeichnet, dass** die Auslasszweige (38a, 38b, 38c) der zweiten Presse (14) und/oder die Auslasszweige (40a, 40b, 40c) der dritten Presse (16) dazu ausgelegt sind, mit den drei Auslasszweigen (36a, 36b, 36c) der ersten Presse (12) verbunden zu werden.

6. Anlage (10) nach Anspruch 5, **dadurch gekennzeichnet, dass** die Auslasszweige (36a, 36b, 36c; 38a, 38b, 38c; 40a, 40b, 40c) dazu ausgelegt sind, mittels Abflussverteiler (68, 70, 72) miteinander verbunden zu werden; wobei erste Auslasszweige (36a, 38a, 40a) jeder Presse (12, 14, 16) dazu ausgelegt sind, mit einem ersten Abflussverteiler (68) verbunden zu werden, zweite Auslasszweige (36b, 38b, 40b) jeder Presse (12, 14, 16) dazu ausgelegt sind, mit einem zweiten Abflussverteiler (70) verbunden zu werden, und dritte Auslasszweige (36c, 38c, 40c) jeder Presse (12, 14, 16) dazu ausgelegt sind, mit einem dritten Abflussverteiler (72) verbunden zu werden.

7. Anlage (10) nach Anspruch 1, **dadurch gekennzeichnet, dass** die Waschwasserzufuhr (42) mit dem Einlasskanal (30a, 30b, 30c) jeder Presse (12, 14, 16) oder mit dem Trichter (18, 20, 22) zum Laden und Zuführen von pflanzlichem Rohmaterial verbunden ist.

8. Anlage (10) nach Anspruch 1, **dadurch gekennzeichnet, dass** jede der Pressen (12, 14, 16) mittels des entsprechenden Einlasskanals (30a, 30b, 30c) mit einem entsprechenden Trichter (18, 20, 22) zum Laden und Zuführen von pflanzlichem Rohmaterial verbunden ist.

9. Verfahren zum Extrahieren von Saft aus pflanzlichem Rohmaterial, insbesondere zum Extrahieren von Most aus Traubenbeeren, mittels einer Anlage nach einem oder mehreren der Ansprüche 1 bis 8, **gekennzeichnet durch** die folgenden Schritte:
(a) Beladen des Trichters (18) der ersten Presse (12) mit pflanzlichem Rohmaterial eines ersten Typs, Betätigen des Ventilmittels (30, 32) und Überführen über den entsprechenden Einlasskanal (30a) zu der ersten Presse (12) ;
(b) bei Erreichen eines vorbestimmten Füllprozentsatzes der ersten Presse (12) Betätigen des Ventilmittels (30, 32) zum Überführen des ersten Typs von pflanzlichem Rohmaterial von dem Trichter (18) der ersten Presse (12) zu dem Einlasskanal (30b) der zweiten Presse (14), bis ein vorbestimmter Füllprozentsatz der zweiten Presse (14) erreicht ist;
c) am Ende des Pressschritts in der ersten Presse (12) und in der zweiten Presse (14) Umschalten des Ventilmittels (30, 32) zum Zuführen von Waschwasser zu dem Einlasskanal (30a, 30b) der ersten Presse (12) und der zweiten Presse (14) .

10. Verfahren nach Anspruch 9, **dadurch gekennzeichnet, dass** das Überführen des pflanzlichen Rohmaterials von dem Trichter (18) der ersten Presse (12) zu dem Einlasskanal (30b) der zweiten Presse (14) dann erfolgt, wann die erste Presse (12) vollständig gefüllt ist.

11. Verfahren nach Anspruch 9, **gekennzeichnet durch** die folgenden Schritte:
d) bei Erreichen eines vorbestimmten Füllprozentsatzes der zweiten Presse (14) Betätigen des Ventilmittels (30, 32, 34) zum Überführen des ersten Typs von pflanzlichem Rohmaterial von dem Trichter (18) der ersten Presse (12) zu dem Einlasskanal (30c) der dritten Presse (16), bis ein vorbestimmter Füllprozentsatz der dritten Presse (16) erreicht ist;
e) am Ende des Pressschritts in der dritten Presse (16) Umschalten des Ventilmittels (34) zum Zuführen von Waschwasser zu dem Einlasskanal (30c) der dritten Presse (16) .

12. Verfahren nach Anspruch 11, **gekennzeichnet durch** den folgenden Schritt:
f) Betätigen des Ventilmittels (32, 34) zum Verbinden der Einlasskanäle (30b, 30c) der zweiten Presse (14) und der dritten Presse (16) mit einem zweiten Trichter (20) und/oder einem dritten Trichter (22), der mit pflanzlichem Rohmaterial beladen ist, das sich von dem pflanzlichen Rohmaterial des ersten Trichters (18) unterscheidet.

13. Verfahren nach Anspruch 11, **gekennzeichnet durch** den folgenden Schritt:
g) während des Überführens des pflanzlichen Rohmaterials von dem ersten Trichter (18) zu der ersten Presse (12), gleichzeitiges oder alternatives Übertragen des ersten pflanzlichen Materials von dem zweiten Trichter (20, 22) zu der zweiten Presse (14) und/oder zu der dritten Presse (16) .

## Revendications

1. Installation (10) pour l'extraction de jus à partir de matière première végétale, en particulier pour l'extraction de moût à partir de baies de raisin, du type comprenant au moins deux presses (12; 14, 16), pourvues d'un conduit d'entrée (30a; 30b, 30c) et d'un premier conduit de sortie (36; 38, 40) pour le jus extrait et d'un second conduit de sortie ou ouverture de décharge (54; 56, 58) pour les résidus solides ou lies de la matière première végétale de départ, lesdites presses (12; 14, 16) étant du type à membrane et étant pourvues de trous de drainage communiquant avec ledit premier conduit de sortie (36; 38, 40), ledit conduit d'entrée (30a; 30b, 30c) étant relié à la fois à une trémie (18; 20, 22) pour le chargement et l'alimentation de ladite matière première végétale et à une alimentation en eau de lavage (42), **caractérisée en ce que** lesdites au moins deux presses (12; 14, 16) sont montées en parallèle l'une avec l'autre et sur ledit conduit d'entrée (30b, 30c) de la deuxième (14, 16) desdites au moins deux presses (12; 14, 16), des moyens de soupape (32, 34) sont prévus qui sont mobiles entre deux positions, une première position dans laquelle le conduit d'entrée (30b, 30c) de ladite deuxième presse (14, 16) est relié à ladite trémie de chargement et d'alimentation (18) de ladite première presse (12) et une seconde position dans laquelle ladite deuxième presse (14, 16) est reliée à une trémie de chargement et d'alimentation (20, 22) pour une matière première végétale différente de celle de ladite première presse (12).

2. Installation (10) selon la revendication 1, **caractérisée en ce que** lesdites au moins deux presses (12; 14, 16) sont du type à membrane centrale.

3. Installation (10) selon la revendication 1, **caractérisée en ce qu'**elle comprend trois presses (12, 14, 16) montées en parallèle et **en ce que** lesdits moyens de soupape (32, 34) sont montés sur les conduits d'entrée (30b, 30c) desdites deuxième et troisième presses (14, 16).

4. Installation (10) selon l'une quelconque des revendications précédentes, **caractérisée en ce que** chaque premier conduit de sortie (36, 38, 40) de chaque presse (12, 14, 16) est relié par des moyens de soupape (37, 39, 41) à trois branches de décharge (36a, 36b, 36c ; 38a, 38b, 38c; 40a, 40b, 40c), conçues pour être sélectionnées en fonction de la matière première végétale traitée dans chaque presse (12, 14, 16), l'une desdites branches de décharge (36c, 38c, 40c) étant dédiée à la décharge d'eau de lavage.

5. Installation (10) selon la revendication 4, **caractérisée en ce que** les branches de décharge (38a, 38b, 38c) de ladite deuxième presse (14) et/ou les branches de décharge (40a, 40b, 40c) de ladite troisième presse (16) sont conçues pour être reliées aux trois branches de décharge (36a, 36b, 36c) de ladite première presse (12).

6. Installation (10) selon la revendication 5, **caractérisée en ce que** lesdites branches de décharge (36a, 36b, 36c ; 38a, 38b, 38c ; 40a, 40b, 40c) sont conçues pour être reliées les unes aux autres au moyen de collecteurs de décharge (68, 70, 72) ; les premières branches de décharge (36a, 38a, 40a) de chaque presse (12, 14, 16) étant conçues pour être reliées à un premier collecteur de décharge (68), les deuxièmes branches de décharge (36b, 38b, 40b) de chaque presse (12, 14, 16) étant conçues pour être reliées à un deuxième collecteur de décharge (70) et les troisièmes branches de décharge (36c, 38c, 40c) de chaque presse (12, 14, 16) étant conçues pour être reliées à un troisième collecteur de décharge (72).

7. Installation (10) selon la revendication 1, **caractérisée en ce que** ladite alimentation en eau de lavage (42) est reliée audit conduit d'entrée (30a, 30b, 30c) de chaque presse (12, 14, 16) ou à la trémie (18, 20, 22) pour le chargement et l'alimentation en matière première végétale.

8. Installation (10) selon la revendication 1, **caractérisée en ce que** chacune desdites presses (12, 14, 16) est reliée au moyen du conduit d'entrée correspondant (30a, 30b, 30c) à une trémie correspondante (18, 20, 22) pour charger et fournir une matière première végétale.

9. Procédé d'extraction de jus à partir de matière première végétale, en particulier pour extraire du moût de baies de raisin, au moyen d'une plante selon une ou plusieurs des revendications 1 à 8, **caractérisé par** les étapes consistant à:
(a) charger la trémie (18) de la première presse (12) avec une matière première végétale d'un premier type, actionner lesdits moyens de soupape (30, 32) et transférer par l'intermédiaire du conduit d'entrée correspondant (30a) à ladite première presse (12);
(b) lorsqu'il atteint un pourcentage de remplissage prédéterminé de ladite première presse (12), actionner lesdits moyens de soupape (30, 32) pour transférer ledit premier type de matière première végétale de ladite trémie (18) de la première presse (12) au conduit d'entrée (30b) de ladite deuxième presse (14) jusqu'à ce qu'un pourcentage de remplissage prédéterminé de ladite deuxième presse (14) soit atteint;
c) à la fin de l'étape de pressage dans la première presse (12) et dans la deuxième presse (14), commuter lesdits moyens de soupape (30, 32) pour fournir de l'eau de lavage au conduit d'entrée (30a, 30b) de ladite première presse (12) et de ladite deuxième presse (14).

10. Procédé selon la revendication 9, **caractérisé en ce que** le transfert de ladite matière première végétale de la trémie (18) de la première presse (12) au conduit d'entrée (30b) de la deuxième presse (14) a lieu lorsque la première presse (12) est complètement remplie.

11. Procédé selon la revendication 9, **caractérisé par** les étapes consistant à:
d) lorsqu'il atteint un pourcentage de remplissage prédéterminé de ladite deuxième presse (14), actionner lesdits moyens de soupape (30, 32, 34) pour transférer ledit premier type de matière première végétale de ladite trémie (18) de la première presse (12) au conduit d'entrée (30c) de ladite troisième presse (16) jusqu'à ce qu'un pourcentage de remplissage prédéterminé de ladite troisième presse (16) soit atteint;
e) à la fin de l'étape de pressage dans la troisième presse (16), commuter lesdits moyens de soupape (34) pour fournir de l'eau de lavage audit conduit d'entrée (30c) de la troisième presse (16).

12. Procédé selon la revendication 11, **caractérisé par** l'étape consistant à:
f) actionner lesdits moyens de soupape (32, 34) pour relier les conduits d'entrée (30b, 30c) de ladite deuxième presse (14) et de ladite troisième presse (16) à une deuxième trémie (20) et/ou à une troisième trémie (22) chargée de matière première végétale différente de la matière première végétale de la première trémie (18).

13. Procédé selon la revendication 11, **caractérisé par** l'étape consistant à:
g) pendant le transfert de la matière première végétale de la première trémie (18) à la première presse (12), transférer de manière simultanée ou alternative de la première matière végétale de la seconde trémie (20, 22) à la deuxième presse (14) et/ou à la troisième presse (16).
